# DEMANDE DE BREVET EUROPEEN

(11) **EP 2 816 756 A1**
(43) Date de publication de la demande: **24.12.2014**
(21) Numéro de dépôt: 13187257.4
(22) Date de dépôt: 03.10.2013
(51) Int. Cl.: H04L 9/08

(54) **Procédé et dispositif cryptographique unique à fonction physiquement induplicable**

(30) Priorité: 18.06.2013 EP 13172569
(71) Demandeur: Nagravision S.A., 1033 Cheseaux-sur-Lausanne (CH)
(72) Inventeur: Macchetti, Marco, 22070 Casnate con Bernate (IT); Favi, Claudio, 1867 Ollon (CH)
(74) Mandataire: Leman Consulting S.A.

(57) **Abrégé**

La présente invention concerne un procédé cryptographique pour chiffrer/déchiffrer un message d'entrée (51) au moyen d'un algorithme (50) ayant pour entrées ledit message d'entrée (51), une clé cryptographique (55) et une valeur unique complémentaire (59) utilisée comme paramètre de l'algorithme (50). La donnée de sortie étant constituée par le message d'entrée déchiffré/chiffré par l'algorithme (50) au moyen de la clé cryptographique (55) et de la valeur complémentaire (59). Cette dernière est déterminée sur la base d'une valeur unique (19) physiquement liée à un organe électronique (10) par l'intermédiaire d'une fonction physiquement induplicable (PUF) qui est inhérente à cet organe (10) et qui est utilisée pour générer cette valeur unique (19) à partir d'une pluralité de mesures physiques (f1,f2, fn) effectuées sur des composants (11) intégrés dans ledit organe (10).

## Description

### DOMAINE TECHNIQUE

La présente invention se rapporte à un procédé cryptographique permettant de chiffrer et/ou déchiffrer des messages introduits comme données d'entrée dans un algorithme cryptographique. Ces messages sont introduits conjointement avec une clé utilisée comme paramètre principal d'une opération cryptographique régie par l'algorithme. Plus particulièrement, l'invention a trait à l'utilisation de fonctions physiquement induplicables dans un tel procédé, à savoir à l'utilisation de fonctions que l'on ne peut pas reproduire, copier ou cloner. L'invention concerne également un dispositif cryptographique pour la mise en oeuvre d'un tel procédé.

### ART ANTERIEUR

Les fonctions physiquement induplicables (connues en anglais sous l'appellation de « Physically Unclonable Functions » ou PUF en abrégé) sont actuellement à l'étude dans le monde universitaire et le monde industriel en tant que sources d'identificateurs uniques, physiquement liés à des composants électroniques incorporés ou associés à des circuits intégrés. L'idée principale vise à exploiter les variations du processus de fabrication de ces composants qui rendent uniques des organes électroniques (tels que des puces) grâce à leurs propriétés intrinsèques.

Cette technologie repose sur les particularités que possèdent ordinairement tous les processus de fabrication de composants électroniques. Du fait que de tels processus soient imparfaits, ils génèrent malgré eux des différences mineures entre les composants qu'ils fabriquent. En d'autres termes, bien que ces composants soient issus d'une même chaîne de production et produits dans des mêmes conditions, il existe toutefois des différences qui, de façon intrinsèque, personnalisent involontairement ces composants. L'astuce consiste à transformer ces différences, résultant des aléas du processus de fabrication, en une information exploitable ayant pour particularité d'être non prédictible et non reproductible par le processus de fabrication, et ainsi de pouvoir identifier un composant ou un ensemble de composants électroniques parmi d'autres.

Une fonction physiquement induplicable, dénommée ci-après fonction PUF, est une fonction qui tire profit des variations aléatoires propres aux composants d'un circuit intégré en déterminant par des mesures précises, une ou plusieurs grandeurs physiques de ces composants électroniques. Il est ainsi facile de créer une telle fonction PUF mais il est très difficile, voire impossible, de la cloner, par exemple en créant une fonction qui donnerait lieu à un identificateur prédéfini particulier, principalement du fait que la valeur issue d'une telle fonction est impossible à prédire et/ou à reproduire. L'information issue de ces infimes différences peut être représentée par une séquence de bits pseudo-aléatoires. Cette information possède donc toutes les caractéristiques attendues d'un secret qui pourra être avantageusement utilisé à des fins cryptographiques.

La majeure partie des applications envisagées jusqu'ici peuvent être regroupées en trois catégories principales, à savoir la génération de puces identifiables au moyen d'un identifiant unique définit par une telle fonction PUF, l'authentification de puces par un processus faisant intervenir des défis et des réponses associées (de type challenge/response en anglais), ainsi que la génération de clés cryptographiques.

Actuellement, on constate que la majorité des applications se réfèrent à cette dernière catégorie et visent à couvrir des solutions où la valeur de la fonction PUF est utilisée comme clé cryptographique dans des échanges de messages sécurisés. Dans une telle approche, un premier problème réside dans le fait que l'utilisateur n'est pas en mesure de choisir la valeur de la fonction PUF étant donné qu'elle est déterminée pour chaque puce par les caractéristiques intrinsèques de cette dernière. Par conséquent, la clé de l'algorithme devient un élément prédéfini, immuable pour l'utilisateur. Un autre problème réside dans le fait qu'il est peu commode, voire compliqué, d'implémenter un changement de clés dans un système existant, en particulier, dans un système faisant appel à une hiérarchisation de clés qui a déjà été fixée et qui est déjà mise en fonction.

De plus, la valeur de la fonction PUF est une valeur qui ne peut être définie comme immuable que dans des conditions théoriques idéales correspondant à une absence de bruit parasite. Or, dans la réalité, cette valeur fluctue légèrement en fonctions des conditions d'utilisation. Ces fluctuations peuvent typiquement se référer à des variations de température de fonctionnement des composants électroniques ou à de légères variations dans le voltage de leur alimentation. Elles peuvent également découler d'un bruit aléatoire produit par le circuit lui-même (par exemple dans le cas d'un circuit âgé) ou par l'environnement dans lequel il se trouve. Ces instabilités engendrent des réponses erronées, à savoir des réponses qui, dans certaines conditions d'utilisation, ne correspondent plus à celles qui étaient obtenues dans un environnement contrôlé, tel que celui d'une chaîne de production.

Certains fabricants proposent des solutions où les valeurs des clés sont sélectionnables par l'utilisateur final en fonction de messages de configuration. Cependant, comme cet utilisateur final peut modifier de tels messages de configuration, il est ainsi capable de générer facilement de mauvaises clés, ce qui constitue un autre problème des approches actuellement connues.

### BREVE DESCRIPTION DE L'INVENTION

La présente invention vise à remédier au moins en partie aux problèmes précités et propose le recours à une fonction PUF pour rendre l'exécution des algorithmes cryptographiques unique, en les personnalisant de manière à ce qu'ils soient propres à chaque puce ou organe électronique fabriqué.

Pour ce faire, l'invention suggère un procédé cryptographique pour chiffrer /déchiffrer un message d'entrée au moyen d'un algorithme admettant comme données d'entrée ledit message d'entrée, une clé cryptographique et une valeur complémentaire distincte de la clé et utilisée comme paramètre de l'algorithme. Ce procédé produit, en donnée de sortie, le message d'entrée déchiffré/chiffré par l'algorithme au moyen de la clé cryptographique et de la valeur complémentaire.

La valeur complémentaire correspond, à part entière, à une des entrées de l'algorithme cryptographique et, au sein de la communauté cryptographique, est plus connue sous le vocable anglais de « tweak ». Elle permet d'affiner l'algorithme en modifiant légèrement ce dernier et en obtenant, par conséquent, une réponse légèrement différente en donnée de sortie. A l'opposé, l'introduction d'une clé modifiée induit en revanche de profonds changements sur la valeur obtenue en sortie de l'algorithme.

Selon l'invention, cette valeur complémentaire est déterminée sur la base d'une valeur unique physiquement liée à un organe électronique par l'intermédiaire d'une fonction physiquement induplicable (PUF) qui est inhérente à cet organe. Cette fonction PUF est utilisée pour générer cette valeur unique à partir d'une pluralité de mesures physiques effectuées sur des composants intégrés dans l'organe électronique. Avantageusement, le procédé cryptographique de la présente invention permet, sans imposer de clé cryptographique ni influencer son choix, de réaliser des opérations cryptographiques au moyen d'un algorithme qui est personnalisé par une fonction liée physiquement à un support matériel, typiquement à un circuit intégré duquel la fonction PUF est générée.

Dans un mode de réalisation préféré, la fonction PUF est paramétrée par une donnée de consigne qui, lors d'une opération initiale de configuration, permet de personnaliser davantage l'organe électronique hébergeant la fonction PUF, en sélectionnant les composants qui sont à la base de cette fonction. En d'autres termes, cette donnée de consigne permet de choisir, parmi la totalité des composants électroniques à disposition sur un circuit intégré, un sous-ensemble de composants électroniques sur lesquels seront effectuées les mesures d'une ou plusieurs grandeurs physiques. De préférence, cette donnée de consigne permet en outre de déterminer comment les composants électroniques choisis doivent être combinés ensemble pour générer la valeur unique de la fonction PUF.

Avantageusement, une sélection judicieuse offerte par ce choix permet de s'affranchir autant que possible des fluctuations dues aux conditions variables d'utilisation, et de stabiliser ainsi la réponse donnée par la fonction PUF. Ainsi l'administrateur légitime de l'organe électronique, à savoir le gestionnaire qui contrôle la création de l'organe électronique et plus généralement la puce ou la carte électronique du module cryptographique, aura la liberté de choisir (même dynamiquement) la valeur de la fonction PUF qui sera utilisée comme paramètre dans l'algorithme cryptographique. Ce contrôle peut être obtenu grâce à l'introduction d'un message de consigne (donnée de consigne), lequel sera pris en compte à chaque fois que doit être générée la valeur unique découlant de la fonction PUF.

D'autres avantages et modes de réalisation seront également présentés dans la description détaillée qui va suivre.

### BREVE DESCRIPTION DES FIGURES

L'invention sera mieux comprise grâce aux dessins schématiques annexés, donnés à titre d'exemples nullement limitatifs, dans lesquels :
La figure 1 est une représentation schématique d'une organe électronique, typiquement un circuit intégré, qui exploite une fonction physiquement induplicable (PUF).
La figure 2 est une illustration d'un premier mode de réalisation du procédé faisant l'objet de la présente invention.
La figure 3 est une représentation schématique de l'organe électronique de la figure 1 selon un second mode de réalisation amélioré.
La figure 4 est une représentation de quatre étapes successives A) à D) effectuées selon un troisième mode de réalisation du procédé mis en oeuvre au moyen de l'organe électronique illustré à la figure 3.
La figure 5 est une représentation schématique d'un quatrième mode de réalisation du procédé de la présente invention.
La figure 6 est une variante du procédé de la figure 5 conformément à une représentation partielle du procédé de l'invention.
La figure 7 donne une représentation schématique d'un mode de réalisation du dispositif cryptographique correspondant au second objet de la présente invention.

### EXPOSE DE L'INVENTION

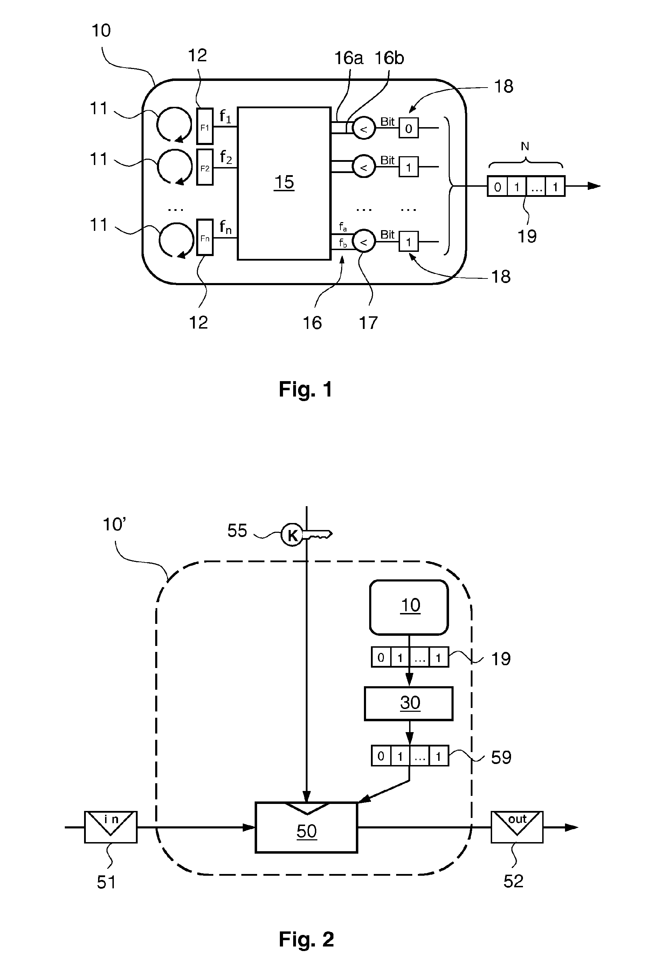

En référence à la figure 1, celle-ci représente un organe électronique 10, pouvant être typiquement un circuit intégré, une puce électronique ou une partie d'une puce. Cet organe 10 comprend plusieurs éléments électroniques, parmi lesquels se trouvent une pluralité de composants 11 utilisés comme éléments sources pour fournir des mesures utiles à la création d'une fonction physiquement induplicable, dite fonction PUF. Comme schématiquement représentés sur cette figure, ces composants 11 sont constitués par exemple d'oscillateurs distincts dont le nombre est typiquement voisin de plusieurs dizaines. Ces oscillateurs 11 sont chacun couplés à un organe de mesure 12 destinés à déterminer une valeur physique propre à chaque oscillateur. Dans le cas présent, les organes de mesure 12 sont aptes à mesurer avec précision les fréquences f des oscillateurs pour lesquels ils sont dédiés. Bien que dans la suite de l'exposé on se référera essentiellement à des oscillateurs comme exemples de composants 11, il est clair que ce mode de réalisation n'est nullement limitatif et que l'on pourrait utiliser d'autres composants 11, desquels d'autres grandeurs physiques pourraient être mesurées, telles que le courant, la tension, la puissance, la résistance, la température, le temps, l'intensité lumineuse, etc...

En première approche on peut considérer que les oscillateurs qui composent l'organe électronique 10 sont identiques et ne diffèrent pas d'un organe 10 à l'autre, notamment si ceux-ci sont issus d'une même chaîne de fabrication. Toutefois, en seconde approche on peut constater que chaque oscillateur possède une fréquence qui lui est propre et que les fréquences de tous les oscillateurs ne sont pas exactement identiques mais qu'elles fluctuent légèrement d'un à l'autre. Au niveau des technologies submicroniques profondes, la faible variation de la fréquence au sein d'oscillateurs de même type produits par un même processus de fabrication sur une ou plusieurs chaînes de production identiques est suffisante pour que l'on puisse créer une fonction physiquement induplicable. Cette fonction PUF va donc tirer parti du fait que chaque oscillateur possède une fréquence intrinsèque qui essentiellement résulte des faibles variations auxquelles il a été soumis en cours de fabrication.

Les valeurs f₁, f₂, ... fₙ mesurées par les organes 12 de la figure 1 sont acheminées à une unité centrale 15 qui, en fonction de paramètres prédéfinis, est à même de les regrouper par paires et de diriger chacune de ces paires vers deux sorties 16 particulières de l'unité centrale. Pour ce faire, ces sorties 16 sont également regroupées par paires de sorties 16a, 16b, chacune de ces paires menant finalement une paire de valeurs mesurées (fₐ, f_{b}) à un comparateur 17, schématisé ici à l'extérieur de l'unité centrale 15.

Chaque comparateur 17 a pour but de déterminer laquelle des sorties 16a, 16b, parmi celles qui lui sont associées, véhicule la mesure la plus élevée ou la plus faible. En réponse, le comparateur 17 produira à sa sortie, une valeur binaire élémentaire 18 qui typiquement sera un bit 1 ou 0. Cette valeur binaire élémentaire pourra être équivalente au bit 0 dans le cas où, par exemple, la valeur mesurée qui est acheminée par la sortie 16a est inférieure à celle qui est acheminée via la sortie 16b. A l'inverse, si la valeur issue de la sortie 16a est supérieure à celle de la sortie 16b, le comparateur 17 produira alors une valeur binaire élémentaire 18 correspondant au bit 1.

La séquence de toutes les valeurs binaires élémentaires produites par la succession ordonnées des comparateurs 17 constituera une valeur unique 19, pouvant être également dénommée valeur PUF en référence à la fonction du même nom qui produit cette valeur. Cette valeur est unique car elle est propre à l'organe électronique 10. De plus, elle est physiquement liée à cet organe 10 car elle est issue de mesures d'une ou plusieurs grandeurs physiques des composants de cet organe. Du fait que cette valeur unique soit composée de toutes les valeurs binaires élémentaires 18 et que ces dernières soient notamment caractéristiques des propriétés physiques des oscillateurs 11, alors ladite valeur unique 19 issue de l'organe électronique 10 est une valeur qui est comparable à une sorte d'empreinte digitale ou une signature propre à l'organe électronique 10.

La figure 2 donne une illustration schématique d'un premier mode de réalisation du procédé de la présente invention. On retrouve sur cette figure l'organe électronique 10 qui peut être une des parties d'un ensemble d'éléments constituant par exemple un module cryptographique 10'. A cet effet, ce module intègre également des moyens pour mettre en oeuvre un algorithme cryptographique 50, pour recevoir un message d'entrée 51 à chiffrer ou déchiffrer, pour recevoir une clé cryptographique 55 utile à l'algorithme 50 et pour émettre en réponse un message de sortie 52 correspondant à la transformation (chiffrage/déchiffrage) du message d'entrée 51 par l'algorithme 50.

Selon l'invention et comme illustré sur cette figure, l'algorithme 50 n'est pas simplement paramétré par la clé 55 mais admet également comme donnée d'entrée une valeur complémentaire 59 qui est utilisée comme second paramètre de l'algorithme 50. Avantageusement, la clé 55 n'est pas affectée par cette valeur complémentaire, mais seul l'algorithme 50 de base, qui pourrait être commun à un grand nombre de module cryptographique 10', sera modifié par la valeur complémentaire en le personnalisant. Cette valeur complémentaire 59 a comme particularité d'être déterminée sur la base de la valeur unique 19, à savoir d'être calculée en fonction d'une valeur qui est non seulement unique mais qui en plus est physiquement liée à l'organe électronique 10. La dépendance physique entre cette valeur et l'organe électronique 10 résulte de la fonction PUF mise en oeuvre par cet organe 10 pour générer cette valeur unique 19 à partir d'une pluralité de mesures physique f₁, f₂, ... fₙ, effectuées sur les composants 11 de cet organe.

Avantageusement, lorsqu'elle est exploitée en tant que paramètre d'un algorithme cryptographique, cette liaison physique permet d'obtenir une réponse 52 qui est fonction de l'association entre l'organe électronique 10 et le hardware qui héberge l'algorithme 50. Ainsi, si l'algorithme 50 est mis en oeuvre sur un premier support matériel et que la valeur unique 19 est issue d'un second support matériel, alors seule la réunion de ces deux supports permettra par exemple de déchiffrer correctement un message d'entrée 51 au moyen d'un algorithme 50 paramétré non seulement par une clé 55 mais également par une valeur complémentaire 59 déterminée sur la base de la valeur unique issue du second support matériel. Dans une telle configuration, l'organe électronique 10 sera typiquement dissociable du module cryptographique 10' ou du reste de ce module, en particulier l'organe électronique 10 pourrait être un organe amovible indépendant, apte à être associé au module cryptographique 10'.

Comme illustré sur la figure 2, la valeur complémentaire 59 est délivrée à l'algorithme 50 par un module intermédiaire 30 qui, dans un mode de réalisation simplifié, ne fait qu'attribuer la valeur unique 19 à la valeur complémentaire 59, de manière à ce que cette dernière corresponde simplement à la valeur unique 19 issue de l'organe électronique 10.

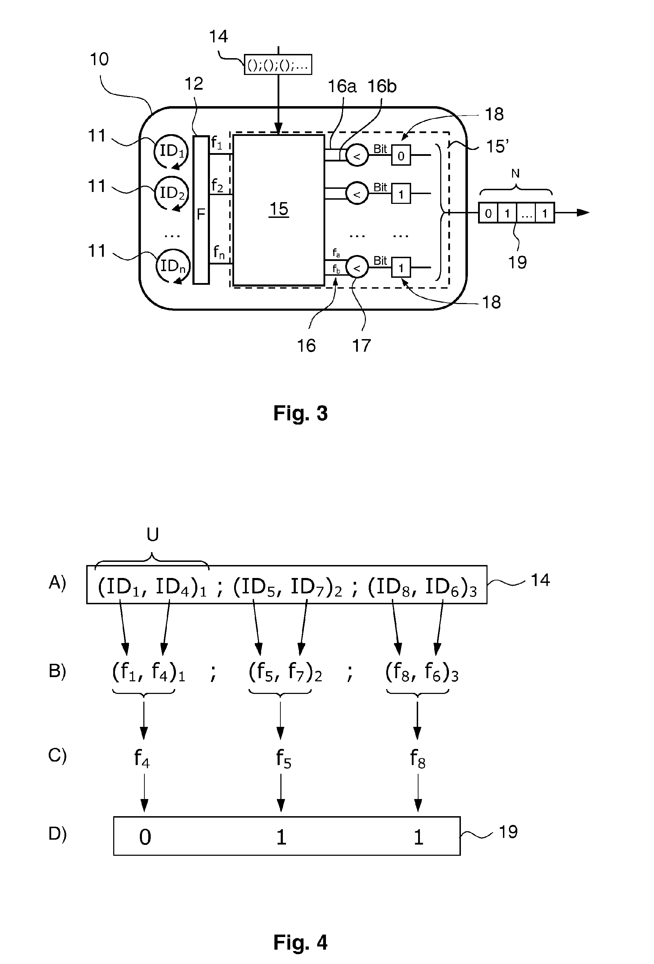

En référence à la figure 3, celle-ci donne une représentation schématique de l'organe électronique de la figure 1 selon un second mode de réalisation amélioré par la présente invention. On remarquera tout d'abord sur cette figure que plusieurs oscillateurs 11 peuvent être reliés à un même organe de mesure 12, de manière à partager un organe de mesure 12 entre plusieurs composants 11, voire avec tous les composants 11. En sortie de l'unité centrale 15, il serait également possible de se contenter d'un nombre restreint de comparateurs 17, voire que d'un seul comparateur, pour traiter plusieurs paires de valeurs mesurées. De plus et comme représenté par le trait interrompu repéré par le numéro de référence 15', le ou les comparateurs 17 pourraient être intégrés à l'unité centrale 15, par exemple sous forme de fonctions logiques. Dans ce cas, la valeur unique 19 serait directement issue de l'unité centrale 15'.

Aussi, on remarquera qu'à chaque composant 11 est associé un identifiant, noté ID₁, ID₂, ... IDₙ qui permet de désigner chaque composant 11 parmi l'ensemble des composants 11 que comporte l'organe électronique 10. Enfin, selon ce mode de réalisation, la fonction PUF est paramétrable par une donnée de consigne 14 qui, comme illustré dans la figure 3, sera de préférence introduite comme paramètre dans l'unité centrale 15, par exemple via une interface dédiée à cet effet. Cette donnée de consigne 14 vise à personnaliser l'organe électronique 10, en particulier la fonction PUF qui est contrôlée par l'unité centrale 15, lors d'une opération préalable de configuration de l'organe électronique. Une telle opération sera typiquement effectuée initialement au moment de la personnalisation de l'organe 10 par un gestionnaire ou un administrateur, lequel intervient dans ce but préalablement à l'utilisation de cet organe par un utilisateur final dans le mode opératoire normal pour lequel il est avant tout destiné. Cette personnalisation permet de sélectionner quels sont les composants 11 sur lesquels devront être effectuées les mesures physiques f₁, f₂, ...fₙ et de déterminer comment grouper ces dernières, à savoir par paire, par triplet ou plus généralement par n-uplets, pour que soit déduite de chaque n-uplet une valeur élémentaire en réponse d'une comparaison effectuée entre les valeurs mesurées qu'il contient.

Avantageusement, la donnée de consigne permet donc de choisir les composants 11 qui devront être pris en compte par la fonction PUF pour générer la valeur unique 19. De ce fait, seule une partie de l'ensemble des composants 11 que comporte l'organe électronique 10 peuvent être pris en considération par cette fonction. De plus, cette valeur de consigne 14 permet également de déterminer et de choisir comment doivent être combinées les valeurs mesurées par le ou les organes 12 pour que soient formées les paires 16a, 16b (prises ici en exemple de n-uplets) introduites chacune dans un comparateur 17. Enfin, il est à remarquer que la donnée de consigne 14 peut encore définir quel est le nombre de valeurs mesurées à prendre en compte lors de chaque opération de comparaison effectuée par un comparateur 17. Ainsi, de tels comparaisons ne se limitent plus à des paires de données, à savoir à des données prises deux par deux mais pourraient également porter sur des groupes de trois ou quatre mesures, voire plus, formant respectivement des triplets, des quadruplets ou plus généralement des n-uplets. La formation de ces n-uplets est décrite ci-après en référence à la figure 4.

La figure 4 est une représentation de quatre étapes successives, notées A à D, qui sont effectuées selon un mode de réalisation préféré du procédé mis en oeuvre par l'organe électronique de la figure 3. En référence à la première étape A est représentée d'une façon plus explicite un exemple de contenu inclus dans la donnée de consigne 14. On remarque que cette dernière comprend une collection de n-uplets notés U, que ces derniers sont indexés et contiennent chacun une pluralité d'identifiants ID1,... IDn ordonnés. En référence par exemple au premier n-uplet (ID₁, ID₄)₁, on notera que l'ordre des identifiants revêt une certaine importance, du fait qu'une paire notée (ID₄, ID₁) produira une réponse inverse de celle issue de la paire (ID₁, ID₄). En revanche, si les n-uplets sont indexés au moyen d'un chiffre d'index, comme le chiffre 2 dans la paire (ID₅, ID₇)₂, il importe peu que ces n-uplets soient ordonnés entre eux. Au contraire, si les n-uplets ne comportent pas expressément de chiffre d'index, l'index par défaut associé à chaque n-uplet de la donnée de consigne sera celui de sa position dans la collection, relativement aux autres n-uplets. Aussi et comme illustré dans cette figure 4, on remarquera que les identifiants des composants de l'organe électronique 10 ne sont pas nécessairement tous considérés, mais qu'une partie au moins de ces identifiants est prise en compte et figure dans la donnée de consigne 14. Ainsi, bien que l'organe électronique 10 puisse intégrer un grand nombre d'oscillateurs 11, il n'est toutefois pas nécessaire que tous ces oscillateurs soient pris en compte pour obtenir, en réponse de la fonction PUF, une valeur unique à la sortie de l'organe 10. Enfin, bien que les n-uplets U dans cette figure soient formés de paires d'identifiants, on notera que n'importe quel n-uplet de la donnée de consigne pourrait comprendre davantage d'identifiants.

Les étapes A à D de la figure 4 illustrent schématiquement la manière dont la valeur unique 19 est obtenue à partir de la donnée de consigne 14. La première étape A consiste à lire cette donnée de consigne. Cette lecture permet de reconnaître les n-uplets U, de connaître leur nombre ainsi que l'index associé à chacun d'eux. En outre, cette lecture permet d'en faire de même pour ce qui est des identifiants compris dans chaque n-uplet.

La seconde étape B vise tout d'abord à effectuer, pour chaque identifiant de chaque n-uplet U, une mesure d'une grandeur physique dudit composant 11 auquel est associé cet identifiant. Puis, cette étape vise à former respectivement, en correspondance de la première collection de n-uplets, une seconde collection de n-uplets indexés (de préférence par les mêmes index que ceux de la première collection), contenant lesdites mesures ainsi effectuées. En exemple avec le premier n-uplet de la valeur de consigne 14, on formera en correspondance un n-uplet qui portera le même index, à savoir le chiffre 1, et qui contiendra premièrement la valeur mesurée f₁, effectuée par un organe de mesure 12 sur le composant 11 auquel est associé l'identifiant ID₁, et deuxièmement la valeur mesurée f₄, effectuée par un organe de mesure 12 sur le composant 11 auquel est associé l'identifiant ID_{4.}

La troisième étape C se réfère uniquement aux n-uplets de la seconde collection et consiste, pour chaque n-uplet de cette seconde collection, à identifier la mesure physique qui est la plus extrême et à associer à ce n-uplet une valeur élémentaire (typiquement un bit) en fonction de l'ordre de la valeur extrême dans ce n-uplet. Cet ordre fait référence à l'ordre dans lequel les valeurs mesurées sont positionnées dans le n-uplet. Dans l'exemple illustré à la figure 4, on cherchera par exemple à déterminer comme valeur extrême, la valeur la plus grande parmi toutes les valeurs mesurées qui font partie d'un même n-uplet. Selon cette condition, il ressort par exemple que la valeur la plus grande entre les mesures f₁ et f₄ du n-uplet d'index 1 est f₄. Pour ce qui est des second et troisième n-uplet de cet exemple, les valeurs extrêmes sont respectivement f₅ et f₈. Bien sûr, on aurait aussi pu considérer la valeur la plus faible comme étant la valeur extrême déterminante. Une fois que la valeur extrême au sein d'un n-uplet a été identifiée, on associe à cet n-uplet une valeur élémentaire, en l'occurrence un bit 1 ou 0 en fonction de la position occupée par cette valeur extrême dans ce n-uplet. Toujours selon l'exemple de la figure 4, il a été choisi de considérer que si la valeur la plus extrême se situe en première position au sein du n-uplet, alors la valeur élémentaire associée à ce n-uplet sera un 1 et dans le cas contraire un 0. Ainsi, comme les valeurs les plus extrêmes sont f4, f5 et f8 pour les n-uplets respectifs de premier, de second et de troisième index, et comme seule la valeur f4 est située en seconde position au sein de son n-uplet, alors les valeurs élémentaires associées à ces trois n-uplets sont respectivement 0, 1 et 1.

La quatrième étape D consiste à combiner (par exemple à concaténer) successivement lesdites valeurs élémentaires, en fonction des index des n-uplets auxquels ces valeurs élémentaires sont associées, pour obtenir au final la valeur unique 19. Dans l'exemple de la figure 4, la valeur unique 19, qui découle des valeurs élémentaires ordonnées en fonction des index des n-uplets associés, est la valeur binaire 011 comportant trois bits. Si chaque valeur élémentaire est une valeur à un bit (ce qui toutefois n'est pas une obligation), alors le nombre de bits N qui constituera la valeur unique 19 correspondra au nombre de réponses obtenues en sortie du ou des comparateurs 17 à l'issue du processus mené dans l'unité centrale 15.

D'un point de vue conceptuel et dans le cas où l'organe électronique 10 comporte un nombre de comparateurs 17 égal ou supérieur au nombre de valeurs élémentaires que doit comprendre la valeur unique 19, l'ordonnancement des n-uplets contenus dans la donnée de consigne 14 sera respecté par l'unité centrale 15 en ses sorties 16, de sorte que, par exemple, le premier n-uplet (n-uplet d'index 1) de la seconde collection sera dirigé vers les premières sorties 16a, 16b menant au premier comparateur 17, le second n-uplet (n-uplet d'index 2) de cette même collection sera dirigé vers les secondes sorties 16a, 16b menant au second comparateur, et ainsi de suite pour tous les n-uplets de la seconde collection. En variante et notamment dans le cas où l'organe électronique 10 comporte moins de comparateurs 17 que mentionné ci-avant, l'unité centrale 15 veillera à délivrer les n-uplets, en ses sorties 16, successivement dans l'ordre de leur index de façon à ce qu'ils puissent être traités dans le même ordre par le ou les comparateurs 17 afin d'obtenir une valeur unique 19 formée d'une succession ordonnée de valeurs élémentaires.

Comme évoqué plus haut en référence à l'opération initiale de personnalisation, le choix des n-uplets de la première collection qui identifient les oscillateurs 11 peut être fait en amont d'un mode normal d'utilisation, typiquement durant un mode de configuration durant lequel la donnée de consigne 14 sera définie. Durant ce mode de configuration, l'administrateur ou le gestionnaire de la donnée de consigne aura la possibilité de lire toutes les valeurs des mesures effectuées sur les oscillateurs 11 par l'intermédiaire d'un ou de plusieurs organes de mesure 12. Avantageusement, la présente invention permet dans cette phase de configuration de sélectionner quels sont les identifiants des oscillateurs qu'il convient de grouper par n-uplets, de manière à pouvoir garantir l'obtention d'une réponse aussi constante que possible lors de la considération des n-uplets correspondant dans la seconde collection.

Le choix des identifiants des oscillateurs 11 dans chaque n-uplet est un choix empirique qui va essentiellement dépendre de statistiques. Ces dernières permettront d'identifier les n-uplets desquels apparaît une différence satisfaisante au niveau des fréquences de manière à pouvoir tolérer autant que possible un bruit résiduel. Une telle différence peut être mise en évidence durant le mode de configuration vu que ce mode autorise la lecture de toutes les valeurs des mesures effectuées sur l'ensemble des oscillateurs 11. L'accès à ce mode de configuration est de préférence protégé. Ainsi, pour pouvoir entrer dans ce mode, l'administrateur devra par exemple signer un message particulier ou fournir un mot de passe. En variante, il pourrait être également possible de bloquer définitivement l'accès au mode de configuration dès que l'administrateur le quitte après son premier accès. Dans pareil cas, le mode de configuration ne serait donc accessible qu'une seule fois, ce qui augmente davantage la protection du dispositif électronique 10.

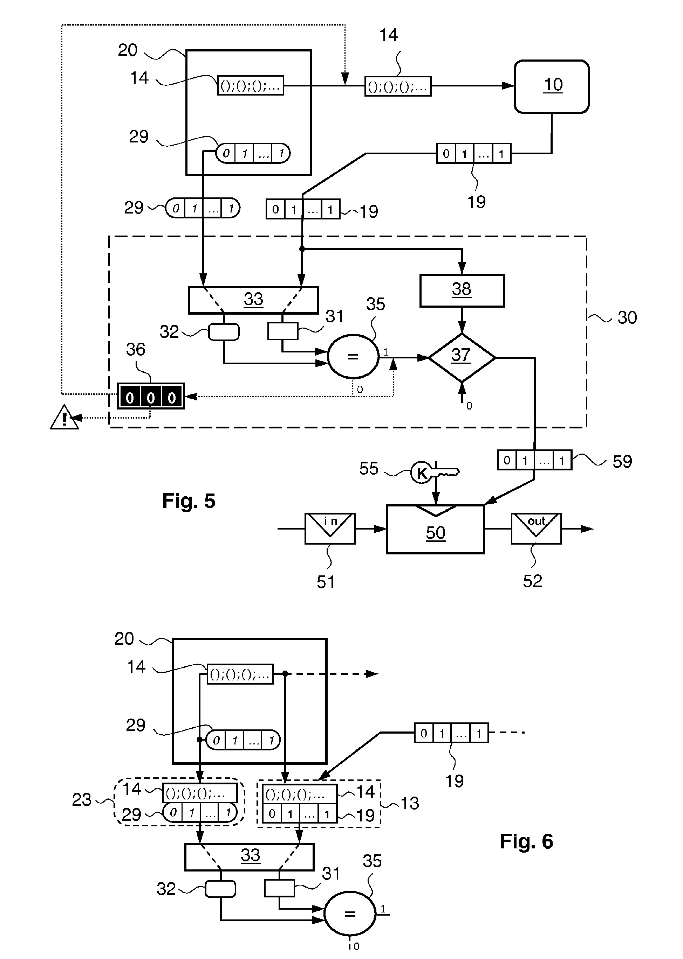

La figure 5 illustre un autre mode de réalisation plus complexe que celui de la figure 2 et qui, comme celui de cette dernière figure, se réfère au mode normal d'utilisation accessible à l'utilisateur final, par opposition au mode de configuration qui est réservé à l'administrateur ou au gestionnaire des organes électroniques 10.

Sur cette figure 5, on reconnaît les éléments illustrés à la figure 2 auxquels a été ajoutée une source de données 20 fournissant d'une part la donnée de consigne 14 à l'organe électronique 10, et d'autre part une valeur attendue de référence 29 au module intermédiaire 30.

La valeur attendue de référence 29 est la valeur à laquelle la valeur unique 19 doit normalement correspondre. Cette valeur de référence 29 est donc la valeur la plus probable que l'on recevra en sortie de l'organe électronique 10, dans des conditions normales d'utilisation. La valeur attendue de référence 29 est de préférence déterminée par avance dans des conditions stables. Ces dernières peuvent être définies par le fabricant et sont celles qui garantissent de pouvoir retrouver autant de fois que possible la même valeur unique 19 lors de réitérations successives de la fonction PUF dans l'organe électronique 10. La valeur attendue de référence 29 est donc celle qui, dans des conditions normales, sera obtenue dans la quasi-totalité des itérations. Grâce à la donnée de consigne 14 qui permet à l'administrateur de choisir judicieusement les identifiants des composants 11 de chaque n-uplet, il est possible d'améliorer la stabilité de la valeur unique 19 en sortie de l'organe électronique 10 et ainsi d'accroître la plage des conditions normales d'utilisation que cet organe est à même de tolérer. Cependant, on ne peut exclure la formation d'une valeur unique 19 différente de celle qui est normalement attendue en sortie de l'organe électronique 10. Ce cas peut en effet se produire par simple basculement d'une valeur binaire élémentaire à l'autre, typiquement lorsque qu'un bit 18 saute de la valeur 0 à la valeur 1 ou inversement, par exemple à la suite d'un excès ponctuel de bruit.

De façon schématique, la source de données 20 regroupe donc un ensemble de données parmi lesquelles une partie a pu être utilisée durant le mode de configuration de l'organe électronique 10, et une autre partie sera utilisée durant le mode d'utilisation normal par l'utilisateur final. De façon plus concrète, au moins une partie de ces données peut être enregistrée au sein d'un organe de stockage ou provenir d'un organe de distribution externe. L'organe de stockage peut être connecté à l'organe électronique 10 ou être logé directement au sein de ce dernier. Dans ce dernier cas, l'organe de stockage peut être une mémoire flash ou une mémoire d'accès protégé, voire une mémoire associée de manière monolithique à une puce électronique, par exemple à l'organe électronique 10. Le choix entre ces différents types de mémoire peut dépendre des données s'y trouvant stockées, en particulier de leur nature confidentielle ou non. Typiquement, la valeur attendue de référence 29 pourrait correspondre à une donnée confidentielle, en particulier si elle ne se trouve pas sous une forme brouillée, codée ou combinée, mais qu'est mémorisée telle qu'elle. Enfin, l'organe de distribution peut être un fournisseur de données auquel l'organe de stockage et/ou l'organe électronique 10 peuvent se connecter par une liaison filaire ou par une liaison sans fil de tout type (réseau téléphonique mobile, Wi-Fi, Bluetooth, NFC, etc...).

Toujours en référence à l'illustration donnée par la figure 5, on remarque que l'organe électronique 10 produit la valeur unique 19 comme expliqué en référence aux figures précédentes. Cette valeur unique est introduite dans le module intermédiaire 30 en charge de délivrer la valeur complémentaire 59. Ce module intermédiaire 30 comprend au moins un organe de comparaison 35, de préférence précédé d'un organe de transformation 33. En option, l'organe intermédiaire 30 peut notamment inclure en outre un compteur d'itérations 36. Comme représenté à la figure 5, la valeur unique 19 est introduite avec la valeur de référence 29 dans l'organe de transformation 33. Au moyen d'une fonction et sur la base de ces deux valeurs d'entrée, l'organe de transformation produit respectivement une première donnée 31 et une seconde donnée 32. La première donnée 31 découle de la valeur unique 19, à savoir qu'elle est fonction de cette valeur 19. La seconde donnée 32 est quant à elle utilisée comme donnée de référence pour contrôler la première donnée 31. Selon un mode de réalisation, la fonction appliquée dans l'organe de transformation 33 ne fait que produire la même valeur qu'à l'entrée. Ainsi, la première donnée 31 contiendra la valeur unique 19 et la seconde donnée 32 contiendra la valeur attendue de référence 29.

Au moyen de l'organe de comparaison 35, le module intermédiaire 30 détermine ensuite si la première donnée 31 est identique à la seconde donnée 32. Ce test permet de contrôler la valeur unique 19 produite par la l'organe électronique 10. Si la comparaison montre que la premier donnée diffère de la seconde, alors soit la donnée de consigne 14 employée par l'organe électronique 10 lors du mode normal d'utilisation diffère de celle qui avait été définie pour cette organe lors du mode de configuration, soit le processus mettant en oeuvre la fonction PUF au sein de l'organe électronique 10 a souffert d'un bruit ponctuel ayant conduit par exemple à inverser au moins un bit 18 et à produire par conséquence une valeur unique 19 erronées. Dans le premier cas, il se pourrait que l'organe électronique 10 ne soit pas l'organe électronique d'origine ou, plus simplement, ne soit pas le bon organe électronique auquel est associée la valeur attendue de référence 29 en question. Dans le second cas, le procédé pourrait être configuré pour qu'une nouvelle valeur unique 19 puisse être générée par une voie itérative (illustrée en pointillé sur la figure 2), de préférence en passant par un compteur d'itérations 36. Ainsi, un nombre limité de réitérations résultant d'une comparaison produisant une issue négative en sortie de l'organe de comparaison 35 pourrait être prévu avant que le procédé ne se bloque, génère un message d'alerte, délivre définitivement une réponse négative, ou entreprenne une autre action particulière (action imagée dans la figure 5 par un triangle pourvu d'un point d'exclamation).

En fonction du résultat, positif ou négatif, issu de l'organe de comparaison 35, le module intermédiaire 30 va délivrer une valeur complémentaire 59 qui pourra respectivement soit correspondre à la valeur unique 19 ou à une valeur dérivée, soit renfermer une valeur différente assimilable à une réponse erronée, par exemple une valeur par défaut telle que zéro. Dans la première alternative, l'algorithme 50 sera à même d'effectuer une opération cryptographique produisant en réponse une donnée de sortie 52 correcte (pour autant que la clé 55 soit bien sûr également correcte), alors que dans la seconde alternative cette donnée de sortie 52 ne pourra être qu'incorrecte.

La génération de la valeur complémentaire 59 à partir de l'information transmise par l'organe de comparaison 35 peut être réalisée de plusieurs manières. L'une d'entre elles consiste à transmettre le résultat, positif ou négatif, de la comparaison à un organe de sélection 37, par exemple par la transmission d'un bit de valeur 1, respectivement de valeur 0. En fonction de la réponse reçue de l'organe de comparaison 35, l'organe de sélection 37 sera à même de sélectionner s'il convient de délivrer à l'algorithme 50 (via la valeur complémentaire 59) une valeur correcte ou une valeur erronée telle qu'une valeur par défaut, voire une valeur aléatoire (dans la mesure ou la valeur aléatoire est également différente de la valeur unique 19). Pour ce faire, l'organe de sélection 37 peut par exemple soit libérer la valeur unique 19 stockée dans un registre 38 lors de son introduction dans le module intermédiaire 30, soit libérer en remplacement de cette valeur unique une valeur erronée (correspondant à la valeur par défaut 0 dans figure 5).

La figure 6 illustre une variante du mode de réalisation représenté à la figure 5. Selon cette variante, la première donnée 31 et la seconde donnée 32 comprennent en outre chacune la donnée de consigne 14. La fonction effectuée par l'organe de transformation 33 aura donc pour but, le cas échéant, de combiner d'une part la valeur unique 19 à la donnée de consigne 14 et d'autre part la valeur attendue de référence à cette même valeur de consigne 14. La combinaison en question peut par exemple correspondre à une concaténation de ces valeurs ou à une autre combinaison plus complexe. Cette combinaison sera effectuée de la même manière de part et d'autre pour ce qui est de la valeur unique 19 et de la valeur attendue de référence 29. Comme illustré sur la figure 6, les données introduites en entrée dans l'organe de transformation 33 peuvent consister en un premier ensemble de données 13 et en un second ensemble de données 23. Le premier ensemble 13 sera formé par la valeur unique 19, issue de l'organe électronique 10, et par la donnée de consigne 14, issue de la source de données 20. Les données de chacun de ces ensembles peuvent être déjà combinées pour autant que cette combinaison soit réalisée de la même manière pour chaque ensemble.

Suivant un autre mode de réalisation possible, la fonction appliquée par l'organe de transformation 33 sera une fonction de hachage. Ainsi, les première et seconde données 31, 32 correspondront dans ce cas chacune au condensé résultant de la fonction de hachage appliquée respectivement au premier et au second ensemble de données 13, 23. Une telle fonction de hachage est également applicable au mode de réalisation précédent dans lequel seules la valeur unique 19 et la valeur attendue de référence 29 sont entrées dans l'organe de transformation 33. Dans l'une ou l'autre de ces configurations, un hacker ou utilisateur illégitime n'aura pratiquement aucune chance de reproduire la valeur unique 19 issue de la fonction PUF, étant donné que la donnée de consigne nécessaire à la génération de cette valeur unique est validé par une fonction de hachage qui prend en compte la valeur de la fonction PUF elle-même dans son calcul.

Dans un autre mode de réalisation, la seconde donnée 32 (qui correspond à une donnée de référence) pourrait ne pas devoir être calculée par l'organe de transformation 33 mais pourrait être déterminée par avance et obtenue soit directement par la lecture d'une source locale, soit indirectement par l'intermédiaire d'une interface de communication offrant un accès à une source externe. Chacune de ces sources pouvant correspondre à la source 20 représentée sur les figures 5 et 6. Avantageusement selon ce mode de réalisation, la valeur attendue de référence 29 pourrait alors être tenue secrète dans le cas où la seconde donnée 32 de référence serait dérivée à la fois de la valeur attendue de référence 29 et de la donnée de consigne 14, soit par le biais d'une combinaison complexe, soit via une fonction de hachage. Avantageusement encore, cette second donnée 32 pourrait ainsi être directement exploitable sans devoir être calculée à chaque reprise, en vue de l'étape comparative effectuée par l'organe de comparaison 35. Par ailleurs, la valeur de référence 32 et la donnée de consigne 14 pourraient, ensemble, former un seul bloc de données issu de la source 20. Selon le procédé de l'invention, ce bloc de données est à lui seul suffisant pour générer la valeur complémentaire 59 d'une façon stable, robuste et fiable.

Grâce à la donnée de consigne 14 qui permet de sélectionner, par un choix judicieux, quels sont les composants 11 qu'il convient au mieux de considérer lors de la comparaison des valeurs mesurées f₁, f₂, ...fₙ correspondantes, il est possible d'accroître significativement la fiabilité de la valeur unique 19 obtenue en sortie de l'organe électronique 10. En conséquence, il devient également possible de s'affranchir de tout processus de correction d'erreur (bien connu de l'art antérieur) qui, en revanche, constitue une étape nécessaire dans le cas où la réponse de la puce, qui fait appelle à la fonction PUF, n'est pas suffisamment stable et manque alors de fiabilité. Avantageusement, l'opération de comparaison effectuée par l'organe 35, grâce à la donnée de référence 32, contribue avantageusement à la fiabilité du procédé.

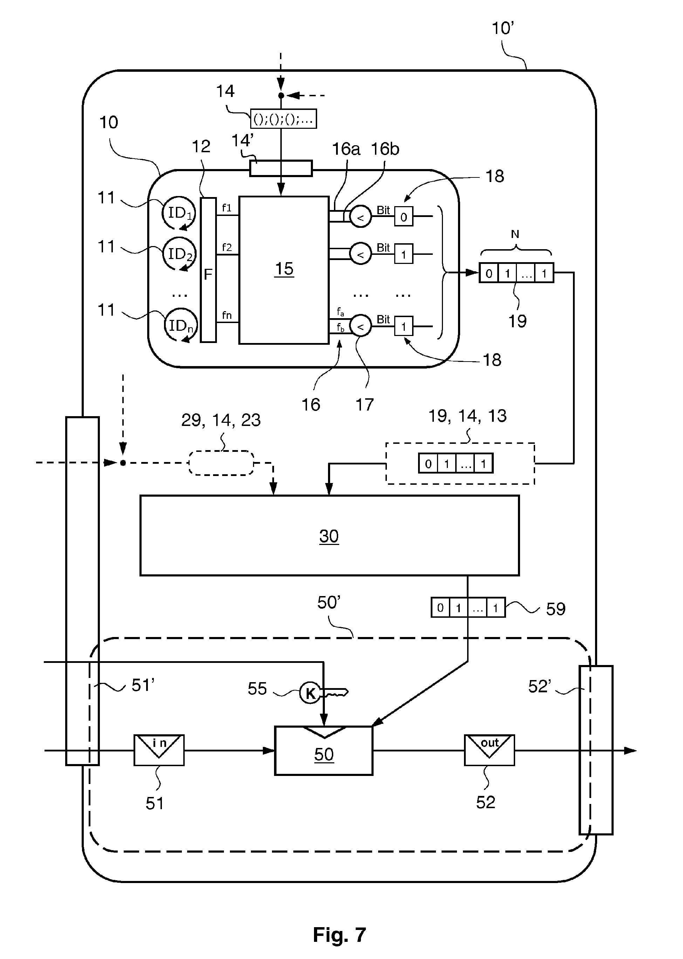

La présente invention concerne également un dispositif cryptographique pour la mise en oeuvre du procédé selon l'une quelconque des variantes décrites précédemment. Comme illustré schématiquement à la figure 7, ce dispositif comprend :
- des moyens pour mettre en oeuvre un algorithme cryptographique 50 à partir d'un message d'entrée 51, d'une clé cryptographique 55 et d'une valeur complémentaire 59 utilisée comme paramètre de l'algorithme 50,
- un organe électronique 10 intégrant une pluralité de composants 11 sur chacun desquels au moins une grandeur physique peut être mesurée par un organe de mesure 12 pour obtenir une valeur mesurée f₁, f₂, fₙ, transmise ensuite à une unité centrale 15 (par une connexion reliant cette dernière à l'organe de mesure 12) en vue de générer une valeur unique 19 par l'intermédiaire d'une fonction PUF inhérente à l'organe électronique 10, et
- des moyens pour paramétrer la valeur complémentaire 59 en fonction de la valeur unique 19.

Selon le mode de réalisation de l'organe électronique 10, l'unité centrale 15 peut intégrer le ou les comparateurs 17 (lesquels peuvent être réalisés sous forme de fonctions logiques) de manière à ce que la valeur unique 19, basées sur les valeurs mesurées et sur la fonction PUF, puisse être issue directement de l'unité centrale 15. De préférence encore, l'organe électronique 10 peut se présenter sous une forme monolithique de sorte que toues les éléments qui le composent se trouvent réunis en un seul bloc. Avantageusement, une telle forme de réalisation offre une protection efficace contre toute tentative de piratage de l'organe électronique 10.

Un tel dispositif pourrait être un module cryptographique telle que le module 10'. Les moyens permettant de mettre en oeuvre l'algorithme 50 pourront être constitués d'une unité cryptographique 50' pourvue d'au moins une interface d'entrée 51' et une interface de sortie 52'. Les moyens pour paramétrer la valeur complémentaire pourront être ceux du module intermédiaire 30.

De préférence, l'unité centrale 15 de l'organe électronique 10 est également paramétrable par la donnée de consigne 14 afin de permettre une sélection des composants 11 sur lesquels seront effectuées les mesures physiques f₁, f₂, ... fₙ servant à déterminer la valeur unique 19 par l'intermédiaire de la fonction PUF.

En variante, l'organe électronique 10 pourrait en outre comporter une interface de communication 14' dédiée à l'introduction de la donnée de consigne 14 dans l'unité centrale 15 afin de permettre, si nécessaire, une reconfiguration de l'organe électronique 10. Au besoin, cette interface 14' pourrait également être reliée à l'interface d'entrée 51' du module cryptographique 10'. Par ailleurs, l'organe électronique 10 peut être amovible et/ou séparé du dispositif cryptographique 10', en particulier du reste de ce dispositif.

De préférence encore et comme déjà mentionné, les composants 11 de l'organe 10 sont des oscillateurs. Cependant, d'autres composants pourraient parfaitement être utilisés afin d'effectuer des mesures autres que des mesures de fréquences. Par ailleurs, les composants 11 ne doivent pas nécessairement être tous de même type et les organes de mesures 12 pourraient également être à même de mesurer différentes grandeurs physiques.

## Revendications

1. Procédé cryptographique pour chiffrer/déchiffrer un message d'entrée (51) au moyen d'un algorithme (50) admettant
comme données d'entrée :
- ledit message d'entrée (51),
- une clé cryptographique (55) et
- une valeur complémentaire (59) utilisée comme paramètre dudit algorithme (50),
et comme donnée de sortie (52) :
le message d'entrée déchiffré/chiffré par ledit algorithme (50) au moyen de la clé cryptographique (55) et de la valeur complémentaire (59),
**caractérisé en ce que** ladite valeur complémentaire (59) est déterminée sur la base d'une valeur unique (19) physiquement liée à un organe électronique (10) par l'intermédiaire d'une fonction physiquement induplicable qui est inhérente à cet organe (10) et qui est utilisée pour générer cette valeur unique (19) à partir d'une pluralité de mesures physiques (f₁,f2, fₙ) effectuées sur des composants (11) intégrés dans ledit organe (10).

2. Procédé selon la revendication 1, **caractérisé en ce qu'à** chacun desdits composants (11) est associé un identifiant et **en ce que** ladite fonction physiquement induplicable est paramétrée par une donnée de consigne (14) qui personnalise l'organe électronique (10) lors d'une opération initiale de configuration en sélectionnant les composants (11) sur lesquels sont effectuées lesdites mesures physiques (f₁,f₂, fₙ).

3. Procédé selon la revendication 2, **caractérisé en ce que** ladite donnée de consigne (14) fournit une collection de n-uplets indexés contenant chacun une pluralité d'identifiants ordonnés, sélectionnés parmi lesdits identifiants associés aux composants (11), et **en ce que**
ladite valeur unique (19) est déterminée par les étapes consistant à :
- lire la donnée de consigne (14),
- effectuer pour chaque identifiant de chaque n-uplet une mesure d'une grandeur physique dudit composant (11) auquel est associé cet identifiant et former respectivement en correspondance une seconde collection de n-uplets indexés contenant les valeurs ainsi mesurées (f₁,f₂, fₙ),
- identifier, pour chaque n-uplet de la seconde collection, la valeur mesurée qui est la plus extrême et associer audit n-uplet de la seconde collection une valeur élémentaire (18) en fonction de la position de cette valeur mesurée la plus extrême au sein dudit n-uplet,
- combiner successivement lesdites valeurs élémentaires (18) en fonction des index des n-uplets auxquels ces valeurs élémentaires (18) sont associées, pour obtenir ladite valeur unique (19).

4. Procédé selon la revendication 1 ou 2, **caractérisé en ce que** ladite valeur complémentaire (59) correspond à ladite valeur unique (19).

5. Procédé selon la revendication 1 ou 2, **caractérisé en ce que** ladite valeur complémentaire (59) est fonction du résultat d'une comparaison effectuée entre une première donnée (31), découlant de ladite valeur unique (19), et une seconde donnée (32) utilisée comme donnée de référence pour contrôler ladite première donnée (31)

6. Procédé selon la revendication 5, **caractérisé en ce que** ladite première donnée (31) comprend ladite valeur unique (19), et ladite seconde donnée (32) comprend une valeur attendue de référence (29) définie comme étant la valeur que produit ladite fonction physiquement induplicable lors de ladite opération de configuration.

7. Procédé selon la revendication 6, **caractérisé en ce que** chacune desdites première et seconde donnée (31, 32) comprend en outre ladite donnée de consigne (14) prise en combinaison respectivement avec ladite valeur unique (19) et ladite valeur attendue de référence (29).

8. Procédé selon la revendication 5, **caractérisé en ce que** lesdites première et seconde donnée (31, 32) correspondent chacune à un condensé résultant d'une fonction de hachage appliquée respectivement à ladite valeur unique (19) et à ladite valeur attendue de référence (29).

9. Procédé selon la revendication 8, **caractérisé en ce que** ladite fonction de hachage est en outre appliquée simultanément à ladite donnée de consigne (14) prise en combinaison respectivement avec ladite valeur unique (19) et ladite valeur attendue de référence (29).

10. Procédé selon la revendication 3, **caractérisé en ce que** ladite grandeur physique est une fréquence.

11. Procédé selon l'une des revendications 2 à 9, **caractérisé en ce que** ledit organe électronique (10) acquière ladite donnée de consigne (14) soit directement par la lecture d'une source interne à l'organe électronique (10), soit indirectement par l'intermédiaire d'une interface de communication reliant l'organe électronique (10) à une source externe.

12. Procédé selon l'une des revendications 5 à 8, **caractérisé en ce que** ladite seconde donnée (32) de référence est obtenue soit directement par la lecture d'une source locale, soit indirectement par l'intermédiaire d'une interface de communication offrant un accès à une source externe.

13. Dispositif cryptographique (10') pour la mise en oeuvre du procédé selon l'une quelconque des revendications 1 à 12, comprenant :
- des moyens (50') pour mettre en oeuvre un algorithme cryptographique (50) à partir : d'un message d'entrée (51), d'une clé cryptographique (55) et d'une valeur complémentaire (59) utilisée comme paramètre dudit algorithme (50),
- un organe électronique (10) intégrant une pluralité de composants (11) sur chacun desquels au moins une grandeur physique peut être mesurée par un organe de mesure (12) pour obtenir une valeur mesurée (f₁, f₂, fₙ) transmise ensuite à une unité centrale (15) pour générer une valeur unique (19) par l'intermédiaire d'une fonction physiquement induplicable inhérente audit organe électronique (10),
**caractérisé en ce qu'il** comprend en outre des moyens (30) pour paramétrer ladite valeur complémentaire (59) en fonction de ladite valeur unique (19).

14. Dispositif cryptographique (10') selon la revendication 13, **caractérisé en ce que** ladite unité centrale (15) est paramétrable par une donnée de consigne (14) qui permet de sélectionner les composants (11) sur lesquels sont effectuées lesdites mesures en vue d'obtenir les valeurs mesurées (f₁, f₂, fₙ).

15. Dispositif cryptographique (10') selon la revendication 13 ou 14, **caractérisé en ce que** ledit organe électronique (10) est amovible et/ou séparé du dispositif cryptographique (10').
